# FASCICULE DE BREVET EUROPEEN

(11) **EP 4 088 008 B1**
(45) Date de publication et mention de la délivrance du brevet: **24.01.2024**
(21) Numéro de dépôt: 21709080.2
(22) Date de dépôt: 11.02.2021
(51) Int. Cl.: F01D 11/00, F01D 5/14

(54) **AUBE POUR UNE ROUE AUBAGÉE MOBILE DE TURBOMACHINE D'AÉRONEF, ROUE AUBAGÉE MOBILE, TURBINE ET TURBOMACHINE ASSOCIÉES**
SCHAUFEL FÜR EINE BESCHAUFELTE ROTORSCHEIBE EINER FLUGZEUGTURBOMASCHINE, ZUGEHÖRIGE BESCHAUFELTE ROTORSCHEIBE, TURBINE UND TURBOMASCHINE
BLADE FOR A BLADED ROTOR DISK OF AN AIRCRAFT TURBOMACHINE, CORRESPONDING BLADED ROTOR DISK, TURBINE AND TURBOMACHINE

(30) Priorité: 19.02.2020 FR 2001640
(43) Date de publication de la demande: 16.11.2022
(73) Titulaire: SAFRAN AIRCRAFT ENGINES, 75015 Paris (FR)
(72) Inventeur: GARREAU, Edouard, Emmanuel, 77550 MOISSY-CRAMAYEL (FR); BASSERY, Josserand, Jacques, André, 77550 MOISSY-CRAMAYEL (FR); DESBOIS, Lucas, Geoffrey, 77550 MOISSY-CRAMAYEL (FR); FRANCOIS, Etienne, Léon, 77550 MOISSY-CRAMAYEL (FR); JUGE, Samuel, Laurent, Noël, Mathieu, 77550 MOISSY-CRAMAYEL (FR); MAXIME, Elsa, 77550 MOISSY-CRAMAYEL (FR); TANG, Ba-Phuc, 77550 MOISSY-CRAMAYEL (FR); TRAHOT, Denis, Gabriel, 77550 MOISSY-CRAMAYEL (FR); TSASSIS, Thomas, 77550 MOISSY-CRAMAYEL (FR)
(74) Mandataire: Brevalex
(86) Numéro de dépôt international: PCT/FR2021/050247
(87) Numéro de publication internationale: WO 2021/165600

(56) Documents cités:
- EP-A1- 3 101 236
- EP-A2- 2 372 102
- FR-A1- 3 074 217

## Description

### DOMAINE TECHNIQUE

La présente invention concerne une aube pour roue aubagée mobile de turbomachine d'aéronef, comprenant au moins un becquet d'étanchéité s'étendant axialement en saillie à partir d'un corps de l'aube et présentant deux extrémités circonférentielles opposées, et une extrémité axiale libre dont la section transversale est délimitée intérieurement et extérieurement respectivement par deux portions de cercles concentriques.

Outre une aube pour roue aubagée, la présente invention concerne également une roue aubagée mobile, une turbine pour turbomachine d'aéronef ainsi qu'une turbomachine d'aéronef.

### ÉTAT DE LA TECHNIQUE ANTÉRIEURE

Dans une turbomachine, l'étanchéité entre une roue aubagée mobile et les structures statoriques disposées immédiatement en amont et en aval de la roue aubagée mobile est parfois assurée par la coopération entre des becquets d'étanchéité, qui s'étendent axialement en saillie à partir d'un corps de chaque aube de la roue aubagée mobile, et des éléments adéquats appartenant aux structures statoriques précitées. De tels becquets d'étanchéité peuvent être agencés en pied d'aube et/ou en tête d'aube, du côté amont et/ou du côté aval de l'aube, et permettent ainsi de limiter les fuites d'air hors de la veine primaire.

En fonctionnement, les becquets d'étanchéité sont soumis à la force centrifuge du fait de la rotation de la roue aubagée, et sont de ce fait principalement sollicités en flexion.

Dans certains cas, notamment dans le cas de turbines basse pression rapides pour des turbomachines à très haut taux de dilution (UHBR), par exemple à taux de dilution égal à 15 environ, les contraintes au sein des becquets d'étanchéité sont susceptibles d'atteindre un niveau critique. Les documents EP3101236A1, FR3074217A1 et EP2372102A2 montrent des aubes de l'état de la technique antérieure.

### EXPOSÉ DE L'INVENTION

L'invention a notamment pour but d'apporter une solution simple, économique et efficace à ce problème.

Elle propose à cet effet une aube pour roue aubagée mobile de turbomachine d'aéronef, comprenant au moins un becquet d'étanchéité s'étendant axialement en saillie à partir d'un corps de l'aube et présentant deux surfaces d'extrémité circonférentielle opposées, et une extrémité axiale libre dont la section transversale est délimitée intérieurement et extérieurement respectivement par deux portions de cercles concentriques.

Selon l'invention, le becquet d'étanchéité présente une section transversale de raccordement au corps de l'aube qui est délimitée intérieurement et extérieurement respectivement par une ligne courbe intérieure et par une ligne courbe extérieure, chacune des lignes courbes intérieure et extérieure comprenant :
- une portion médiane respective, qui est convexe dans une direction allant d'une tête de l'aube vers un pied de l'aube ;
- une première portion intermédiaire respective, qui prolonge de manière continue la portion médiane respective en direction d'une première des surfaces d'extrémité circonférentielle du becquet d'étanchéité, et qui est concave dans la direction allant de la tête de l'aube vers le pied de l'aube, moyennant quoi un premier point d'inflexion respectif sépare la portion médiane respective de la première portion intermédiaire respective ;
- une seconde portion intermédiaire respective, qui prolonge de manière continue la portion médiane respective en direction d'une seconde des surfaces d'extrémité circonférentielle du becquet d'étanchéité, et qui est concave dans la direction allant de la tête de l'aube vers le pied de l'aube, moyennant quoi un second point d'inflexion respectif sépare la portion médiane respective de la seconde portion intermédiaire respective ; et
- une première portion d'extrémité respective et une seconde portion d'extrémité respective qui prolongent respectivement de manière continue la première portion intermédiaire respective et la seconde portion intermédiaire respective, respectivement jusqu'à la première et jusqu'à la seconde des surfaces d'extrémité circonférentielle du becquet d'étanchéité.

Chaque portion de la ligne courbe intérieure est définie en regard de la portion correspondante de la ligne courbe extérieure, selon la direction allant de la tête de l'aube vers le pied de l'aube.

La section transversale du becquet d'étanchéité évolue de manière continue depuis la section transversale de raccordement au corps de l'aube jusqu'à l'extrémité axiale libre du becquet d'étanchéité.

La configuration du becquet d'étanchéité selon l'invention permet d'accroître l'inertie de celui-ci, au moins dans une région proche de la section transversale de raccordement au corps de l'aube.

Les inventeurs ont en effet identifié que la contrainte subie par les becquets d'étanchéité de type connu était maximale le long de la section de raccordement au corps de l'aube et à proximité de cette section, et diminuait en direction de l'extrémité axiale libre d'un tel becquet d'étanchéité.

Le becquet d'étanchéité selon l'invention est ainsi apte à mieux supporter des contraintes élevées, notamment au sein d'une turbine basse pression dite « rapide ».

L'invention présente en outre l'avantage de ne pas entraîner d'accroissement de masse significatif d'un becquet d'étanchéité par rapport à une configuration de type connu.

De préférence, la ligne courbe extérieure constitue une image de la ligne courbe intérieure par une transformation homothétique.

De préférence, pour chacune des lignes courbes intérieure et extérieure, la portion médiane respective présente un extremum respectif qui est décalé, dans la direction allant de la tête de l'aube vers le pied de l'aube, par rapport à des extrémités circonférentielles respectives de la ligne courbe considérée, d'une distance qui est supérieure à la moitié d'une distance séparant les extrema respectifs des portions médianes respectives des lignes courbes intérieure et extérieure, et qui est inférieure à une fois et demi la distance séparant les extrema respectifs des portions médianes respectives des lignes courbes intérieure et extérieure.

L'invention concerne également une roue aubagée mobile pour turbomachine d'aéronef, comprenant une rangée annulaire d'aubes du type décrit ci-dessus, réparties autour d'un axe de la roue aubagée mobile, et dans chacune desquelles les deux portions de cercles concentriques, qui délimitent respectivement intérieurement et extérieurement la section transversale de l'extrémité axiale libre du becquet d'étanchéité, ont un centre de courbure commun situé sur l'axe de la roue aubagée mobile.

De préférence, pour chacune des aubes, la transformation homothétique, par laquelle la ligne courbe extérieure constitue une image de la ligne courbe intérieure, est une homothétie dont le centre est situé sur l'axe de la roue aubagée mobile.

De préférence, pour chacune des aubes, les premières et secondes portions d'extrémité respectives sont des portions de cercle ayant un centre de courbure commun situé sur l'axe de la roue aubagée mobile.

De préférence, les becquets d'étanchéité respectifs des aubes s'étendent en continuité aérodynamique deux-à-deux.

L'invention concerne également une turbine pour turbomachine d'aéronef, comprenant au moins une roue aubagée mobile du type décrit ci-dessus.

L'invention concerne également une turbomachine pour aéronef comprenant au moins une roue aubagée mobile du type décrit ci-dessus.

Dans des modes de réalisation de l'invention, la turbomachine comprend un corps haute pression et un corps basse pression, et le corps basse pression comporte une turbine du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'une turbomachine pour aéronef selon un mode de réalisation préféré de l'invention ;
- la figure 2 est une demi-vue schématique partielle en coupe axiale d'une turbine basse pression de la turbomachine de la figure 1, comprenant une roue aubagée mobile pourvue d'aubes selon un mode de réalisation préféré de l'invention ;
- la figure 3 est une vue schématique partielle en perspective d'une aube comprenant un becquet d'étanchéité selon une configuration de type connu ;
- la figure 4 est une vue schématique de face d'une extrémité libre du becquet d'étanchéité de l'aube de la figure 3, dans laquelle la courbure générale du becquet d'étanchéité est négligée ;
- la figure 5 est une vue schématique partielle en perspective et en coupe transversale de l'aube de la figure 3, illustrant une section de raccordement du becquet d'étanchéité à un corps de l'aube ;
- la figure 6 est une vue schématique en section du becquet d'étanchéité de l'aube de la figure 3, dans le plan de la section de raccordement du becquet d'étanchéité au corps de l'aube, dans laquelle la courbure générale du becquet d'étanchéité est négligée ;
- la figure 7 est une vue schématique partielle en perspective d'une aube de la roue aubagée mobile de la turbine basse pression de la figure 2, comprenant un becquet d'étanchéité agencé au niveau du pied de l'aube, selon un mode de réalisation préféré de l'invention ;
- la figure 8 est une vue schématique de face d'une extrémité libre du becquet d'étanchéité de l'aube de la figure 7, dans laquelle la courbure générale du becquet d'étanchéité est négligée ;
- la figure 9 est une vue schématique partielle en perspective et en coupe transversale de l'aube de la figure 7, illustrant une section de raccordement du becquet d'étanchéité à un corps de l'aube ;
- la figure 10 est une vue schématique en section du becquet d'étanchéité de l'aube de la figure 7, dans le plan de la section de raccordement du becquet d'étanchéité au corps de l'aube, dans laquelle la courbure générale du becquet d'étanchéité est négligée.

Dans l'ensemble de ces figures, des références identiques peuvent désigner des éléments identiques ou analogues.

### EXPOSÉ DÉTAILLÉ DE MODES DE RÉALISATION PRÉFÉRÉS

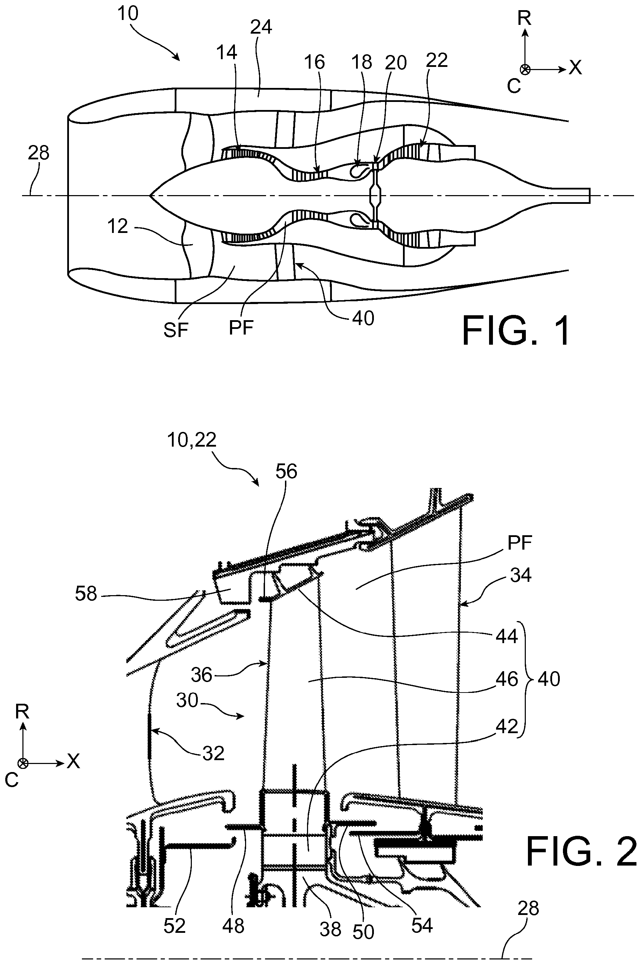

La figure 1 illustre une turbomachine 10 pour aéronef, comportant de manière générale une soufflante 12 destinée à l'aspiration d'un flux d'air se divisant en aval de la soufflante en un flux primaire circulant dans un canal d'écoulement de flux primaire, ci-après dénommé veine primaire PF, au sein d'un coeur de la turbomachine, et un flux secondaire contournant ce coeur dans un canal d'écoulement de flux secondaire, ci-après dénommé veine secondaire SF.

La turbomachine est par exemple du type à double flux et à double corps. Le coeur de la turbomachine comporte ainsi, de manière générale, un compresseur basse pression 14, un compresseur haute pression 16, une chambre de combustion 18, une turbine haute pression 20 et une turbine basse pression 22.

Les rotors respectifs du compresseur haute pression et de la turbine haute pression sont reliés par un arbre de rotor dit « arbre haute pression », tandis que les rotors respectifs du compresseur basse pression et de la turbine basse pression sont reliés par un arbre de rotor dit « arbre basse pression ».

La turbomachine est carénée par une nacelle 24 entourant la veine secondaire SF.

Les arbres de rotor sont montés rotatifs autour d'un axe 28 de la turbomachine.

Dans l'ensemble de cette description, la direction axiale X est la direction de l'axe 28. La direction radiale R est en tout point une direction orthogonale à l'axe 28 et passant par ce dernier, et la direction circonférentielle C est en tout point une direction orthogonale à la direction radiale R et à l'axe 28. Un plan transversal est un plan orthogonal à l'axe 28. Les termes « interne » et « externe » font respectivement référence à une relative proximité, et un relatif éloignement, d'un élément par rapport à l'axe 28. Enfin, les directions « amont » et « aval » sont définies par référence à la direction générale de l'écoulement des gaz dans les veines primaire PF et secondaire SF de la turbomachine, selon la direction axiale X.

La figure 2 illustre une roue aubagée mobile 30 et deux structures statoriques 32 et 34 agencées respectivement immédiatement en amont et immédiatement en aval de la roue aubagée mobile 30.

La roue aubagée mobile 30 est par exemple agencée au sein de la turbine basse pression 22, par exemple à l'entrée de la turbine basse pression 22 auquel cas les deux structures statoriques précitées 32 et 34 sont respectivement un carter inter-turbine et un distributeur.

La roue aubagée mobile 30 comprend une rangée annulaire d'aubes 36, dont l'une est visible sur la figure 2. Ces aubes 36 sont portées par un disque 38 ou formées d'un seul tenant avec un tel disque. Chaque aube 36 comprend un corps 40 formé d'un pied 42 à l'extrémité radialement interne de l'aube, une tête 44, par exemple en forme de talon, formée à l'extrémité radialement externe de l'aube, et une pale 46 reliant le pied 42 à la tête 44.

Des moyens d'étanchéité sont prévus afin de limiter les fuites d'air hors de la veine primaire PF, qui seraient susceptibles d'impacter négativement les performances de la turbomachine.

Au niveau de l'extrémité radialement interne de la veine primaire PF, ces moyens d'étanchéité comprennent par exemple des becquets d'étanchéité 48 s'étendant axialement vers l'amont à partir du corps 40 de chaque aube 36, au niveau du pied 42 de l'aube, ainsi que des becquets d'étanchéité 50 s'étendant axialement vers l'aval à partir du corps 40 de chaque aube 36, également au niveau du pied 42 de l'aube. Les becquets d'étanchéité 48 et 50 coopèrent respectivement avec des anneaux d'étanchéité internes 52 et 54 respectivement portés par les deux structures statoriques 32 et 34.

Au niveau de l'extrémité radialement externe de la veine primaire PF, les moyens d'étanchéité comprennent par exemple des becquets d'étanchéité 56 s'étendant axialement vers l'amont à partir du corps 40 de chaque aube 36, à partir de la tête 44 de l'aube, et coopérant avec un anneau d'étanchéité externe 58.

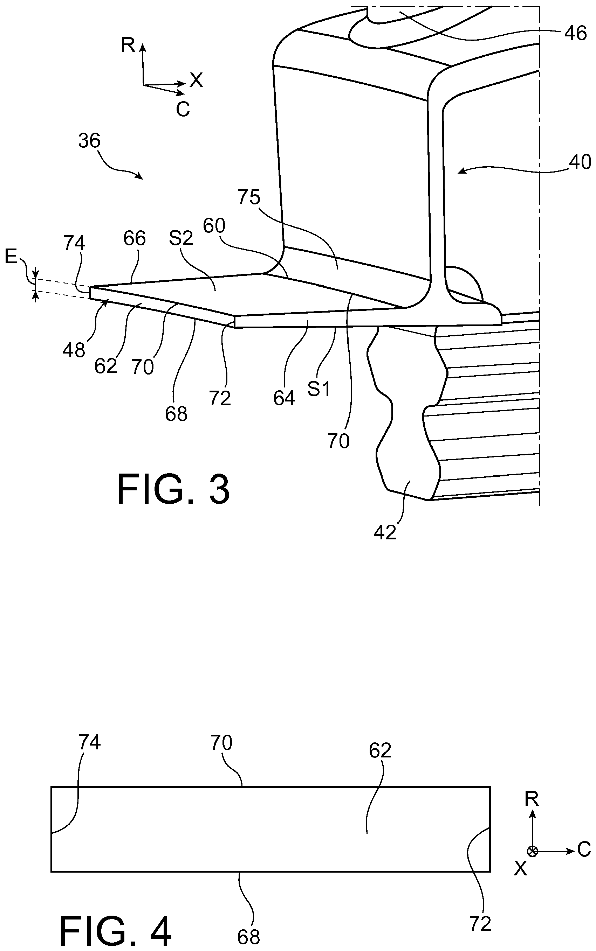

Les figures 3 à 6 illustrent un exemple de becquet d'étanchéité 48 selon une configuration connue.

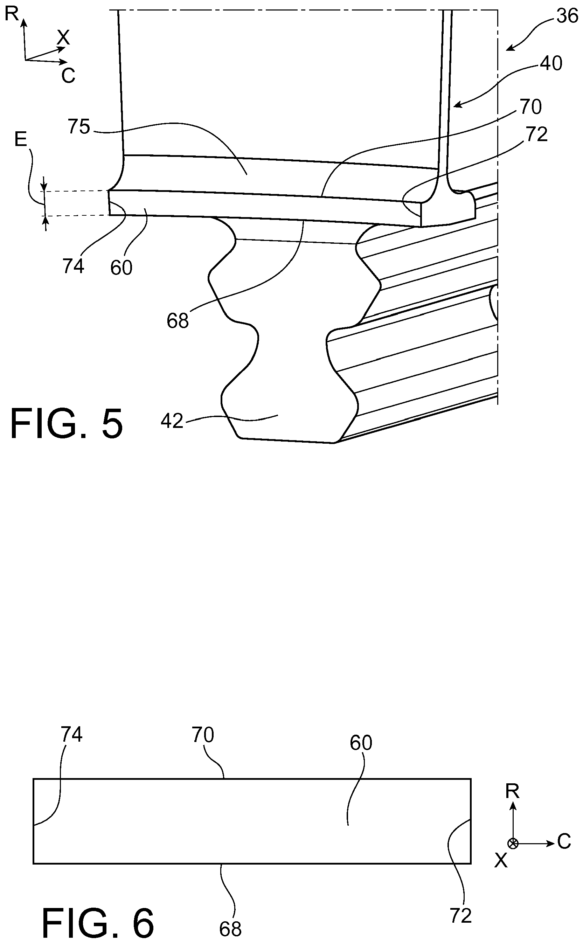

Un tel becquet d'étanchéité 48 s'étend axialement en saillie à partir du corps 40 de l'aube 36 concernée (figure 3). Autrement dit, le becquet d'étanchéité 48 présente une section transversale 60 de raccordement au corps de l'aube (figures 5 et 6), par laquelle le becquet d'étanchéité 48 est relié au corps 40 de l'aube 36, ainsi qu'une extrémité axiale libre 62 (figures 3 et 4). De plus, le becquet d'étanchéité 48 présente deux surfaces d'extrémité circonférentielle opposées 64 et 66 reliant chacune la section transversale 60 de raccordement au corps de l'aube à l'extrémité axiale libre 62 du becquet d'étanchéité 48 (figure 3).

Le becquet d'étanchéité 48 présente typiquement une épaisseur E (c'est-à-dire une étendue selon la direction radiale R) qui se réduit depuis la section transversale 60 de raccordement au corps de l'aube jusqu'à l'extrémité axiale libre 62 du becquet d'étanchéité 48.

Abstraction faite de cette réduction d'épaisseur, le becquet d'étanchéité 48 présente, dans sa configuration connue, une section transversale de forme constante depuis la section transversale 60 de raccordement au corps de l'aube jusqu'à l'extrémité axiale libre 62 du becquet d'étanchéité 48.

Plus précisément, en tout plan de section transversal, le becquet d'étanchéité 48 est délimité intérieurement et extérieurement respectivement par deux portions de cercles 68 et 70, respectivement interne et externe, qui sont concentriques et dont le centre de courbure commun est situé sur l'axe de la roue aubagée mobile 30, qui coïncide avec l'axe 28 de la turbomachine. Il est à noter que la portion de cercle externe 70 constitue ainsi une image de la portion de cercle interne 68 par une transformation homothétique ayant pour centre un point situé sur l'axe 28 de la turbomachine.

Les deux portions de cercles 68 et 70 sont reliées l'une à l'autre à chacune de leurs extrémités circonférentielles, respectivement par deux segments de droites 72 et 74 s'inscrivant respectivement dans les deux surfaces d'extrémité circonférentielle opposées 64 et 66 du becquet d'étanchéité 48.

La réunion des portions de cercle interne 68 définies respectivement en tout plan de section transversale du becquet d'étanchéité 48 forme une surface interne S1 du becquet d'étanchéité. De manière analogue, la réunion des portions de cercle externe 70 définies respectivement en tout plan de section transversale du becquet d'étanchéité 48 forme une surface externe S2 du becquet d'étanchéité.

Les segments de droites 72 et 74 s'étendent chacun radialement. Ainsi, la première surface d'extrémité circonférentielle 64, qui est formée par la réunion des segments de droites 72 définis respectivement en tout plan de section transversale du becquet d'étanchéité 48, s'inscrit dans un plan passant par l'axe 28 de la turbomachine. De manière analogue, la seconde surface d'extrémité circonférentielle 66, qui est formée par la réunion des segments de droites 74 définis respectivement en tout plan de section transversale du becquet d'étanchéité 48, s'inscrit dans un autre plan passant également par l'axe 28 de la turbomachine.

Les figures 4 et 6, qui illustrent respectivement l'extrémité axiale libre 62 et la section transversale 60 de raccordement au corps de l'aube, font abstraction de la courbure générale du becquet d'étanchéité 48, de sorte que les sections transversales correspondantes apparaissent sous la forme de rectangles sur ces figures.

Par ailleurs, comme le montrent les figures 3 et 5, la surface externe S2 du becquet d'étanchéité 48 est raccordée au corps 40 de l'aube par un congé 75.

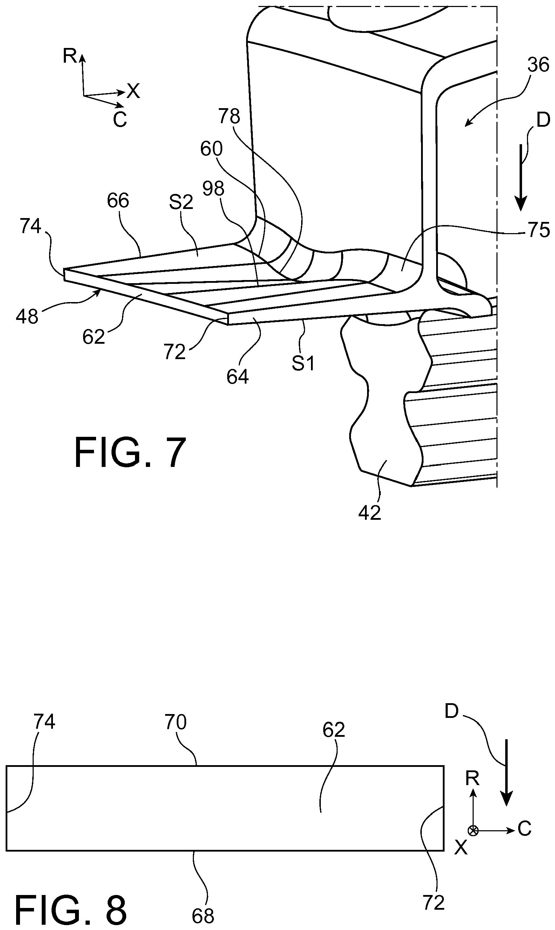

Les figures 7 à 10 illustrent un exemple de becquet d'étanchéité 48 selon un mode de réalisation préféré de l'invention et sont respectivement analogues aux figures 3-6.

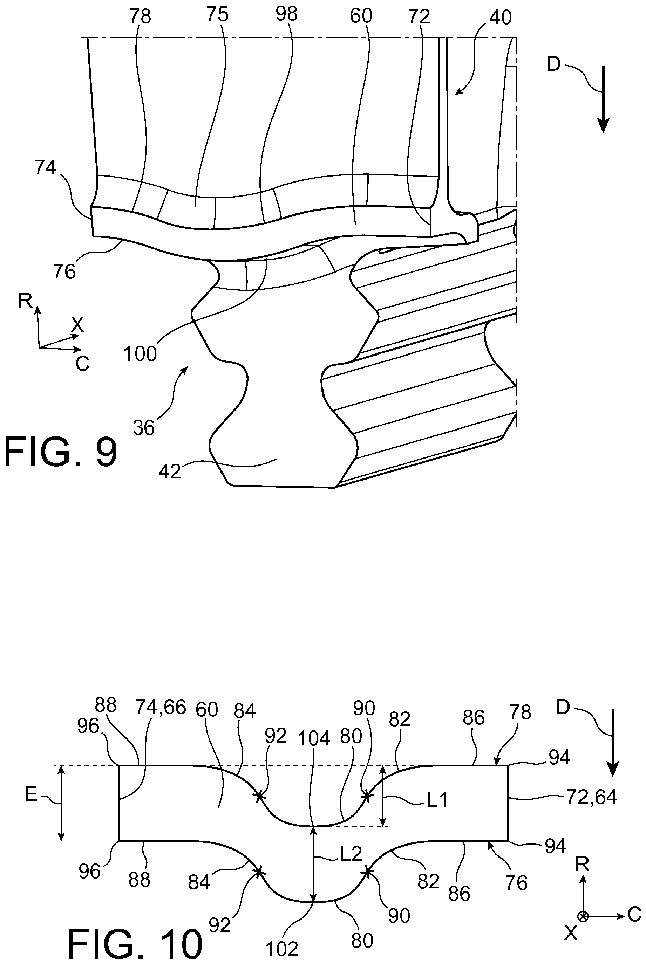

Le becquet d'étanchéité 48 des figures 7-10 se distingue du becquet d'étanchéité de type connu décrit ci-dessus du fait que la section transversale 60 de raccordement au corps de l'aube est délimitée intérieurement et extérieurement respectivement par une ligne courbe intérieure 76 et par une ligne courbe extérieure 78 (figure 9), qui comprennent chacune une portion médiane respective 80, une première portion intermédiaire respective 82, une seconde portion intermédiaire respective 84, une première portion d'extrémité respective 86 et seconde portion d'extrémité respective 88 (figure 10), dont les caractéristiques sont détaillées ci-dessous pour l'une quelconque des lignes courbes intérieure 76 et extérieure 78 et sont également valables pour l'autre des lignes courbes intérieure 76 et extérieure 78.

La portion médiane respective 80 est convexe dans une direction D allant de la tête 44 de l'aube vers le pied 42 de l'aube. La direction D est localement parallèle et de sens contraire à la direction radiale R. Autrement dit, la portion médiane 80 est bombée en direction du pied 42 de l'aube.

La première portion intermédiaire respective 82 prolonge de manière continue la portion médiane respective 80 en direction d'une première surface d'extrémité circonférentielle 64 du becquet d'étanchéité. La première portion intermédiaire respective 82 est concave dans la direction D allant de la tête 44 de l'aube vers le pied 42 de l'aube. Par conséquent, un premier point d'inflexion respectif 90 sépare la portion médiane respective 80 de la première portion intermédiaire respective 82.

La seconde portion intermédiaire respective 84 prolonge de manière continue la portion médiane respective 80 en direction d'une seconde surface d'extrémité circonférentielle 66 du becquet d'étanchéité. La seconde portion intermédiaire respective 84 est concave dans la direction D allant de la tête 44 de l'aube vers le pied 42 de l'aube. Par conséquent, un second point d'inflexion respectif 92 sépare la portion médiane respective 80 de la seconde portion intermédiaire respective 84.

La première portion d'extrémité respective 86 prolonge de manière continue la première portion intermédiaire respective 82 jusqu'à une première extrémité circonférentielle 94 de la ligne courbe considérée, définie dans la première surface d'extrémité circonférentielle 64 du becquet d'étanchéité 48.

La seconde portion d'extrémité respective 88 prolonge de manière continue la seconde portion intermédiaire respective 84 jusqu'à une seconde extrémité circonférentielle 96 de la ligne courbe considérée, définie dans la seconde surface d'extrémité circonférentielle 66 du becquet d'étanchéité 48.

Chacune des lignes courbes intérieure 76 et extérieure 78 présente ainsi un creux respectif localisé circonférentiellement entre ses extrémités circonférentielles 94 et 96 et dont le fond est défini par la portion médiane respective 80.

De plus, chacune des portions précitées de la ligne courbe intérieure 76 est définie radialement en regard, et donc en regard selon la direction D, de la portion correspondante de la ligne courbe extérieure 78. Ainsi, les creux respectifs des lignes courbes intérieure 76 et extérieure 78 sont alignés radialement.

L'extrémité axiale libre 62 est délimitée par deux portions de cercles, respectivement interne 68 et externe 70, de manière analogue à ce qui a été décrit en référence aux figures 3-6

La section transversale du becquet d'étanchéité évolue de manière continue depuis la section transversale 60 de raccordement au corps de l'aube jusqu'à l'extrémité axiale libre 62 du becquet d'étanchéité 48. Autrement dit, les surfaces interne S1 et externe S2 du becquet d'étanchéité 48 ne présentent aucune discontinuité de surface.

Par conséquent, en d'autres plans de section transversale situés entre la section transversale 60 de raccordement au corps de l'aube et l'extrémité axiale libre 62, le becquet d'étanchéité 48 est également délimité par des lignes courbes intérieure et extérieure qui présentent les caractéristiques énoncées ci-dessus pour les lignes courbes intérieure 76 et extérieure 78.

Du fait de l'évolution continue de la section transversale du becquet d'étanchéité 48, l'amplitude du creux formé par la portion médiane respective 80 de chacune des lignes courbes intérieure et extérieure, en un plan de section transversale donné, est d'autant plus faible que ce plan de section transversale est éloigné de la section transversale 60 de raccordement au corps de l'aube et est proche de l'extrémité axiale libre 62.

Il résulte de ce qui précède que le becquet d'étanchéité 48 présente globalement un creux 98 dans sa surface externe S2 et une bosse 100 dans sa surface interne S1 (figure 7).

Dans le mode de réalisation illustré, la ligne courbe extérieure 78 constitue une image de la ligne courbe intérieure 76 par une transformation homothétique ayant pour centre un point situé sur l'axe 28 de la turbomachine.

Par ailleurs, pour chacune des lignes courbes intérieure 76 et extérieure 78, la portion médiane respective 80 présente un extremum respectif 102, 104 qui est décalé, dans la direction D allant de la tête 44 de l'aube vers le pied 42 de l'aube, par rapport aux extrémités circonférentielles respectives 94, 96 de la ligne courbe considérée, d'une distance L1 qui est supérieure à la moitié d'une distance L2 séparant les extrema respectifs 102, 104 des portions médianes respectives 80 des lignes courbes intérieure 76 et extérieure 78, et qui est inférieure à une fois et demi la distance L2 précitée. La distance L2 correspond à l'épaisseur du becquet d'étanchéité 48 au niveau du fond du creux défini par la portion médiane respective 80 de la ligne courbe extérieure 78.

Dans le mode de réalisation illustré, pour chacune des lignes courbes intérieure 76 et extérieure 78, les premières et secondes portions d'extrémité respectives 86, 88 sont des portions de cercle ayant un centre de courbure commun situé sur l'axe 28 de la turbomachine.

La figure 10 fait abstraction de la courbure générale du becquet d'étanchéité 48, de sorte que les portions d'extrémité respectives 86, 88 apparaissent sous une forme rectiligne sur cette figure.

Cette configuration des premières et secondes portions d'extrémité respectives 86, 88 permet que les becquets d'étanchéité 48 respectifs des aubes 36 s'étendent en continuité aérodynamique deux-à-deux. Autrement dit, chaque première surface d'extrémité circonférentielle 64 d'un becquet d'étanchéité 48 s'étend en alignement circonférentiel avec une seconde surface d'extrémité circonférentielle 66 d'un becquet d'étanchéité 48 consécutif.

De cette manière, l'ensemble des surfaces internes S1 respectives des becquets d'étanchéité 48 respectifs des aubes 36 forme sensiblement une enveloppe aérodynamiquement continue autour de l'axe 28 de la turbomachine. Il en est de même en ce qui concerne l'ensemble des surfaces externes S2. Autrement dit, les becquets d'étanchéité 48 s'étendent ainsi en continuité aérodynamique deux-à-deux.

Les caractéristiques particulières décrites ci-dessus en ce qui concerne un becquet d'étanchéité en pied d'aube sont bien entendu également valables en ce qui concerne un becquet d'étanchéité en tête d'aube.

D'une manière générale, la configuration d'un becquet d'étanchéité 48 selon l'invention permet d'accroître l'inertie du becquet d'étanchéité, au moins dans une région proche de sa région de raccordement au corps 40 de l'aube correspondante.

Les inventeurs ont en effet identifié que la contrainte subie par les becquets d'étanchéité de type connu était maximale le long de la section de raccordement au corps de l'aube et à proximité de cette section, et diminuait en direction de l'extrémité axiale libre d'un tel becquet d'étanchéité.

Pour un becquet d'étanchéité en pied d'aube, des simulations ont ainsi montré que l'invention permet de réduire de 17% la contrainte de Von Mises dans la surface externe S2 et de réduire de 27% la contrainte de Von Mises dans la surface interne S1.

Les becquets d'étanchéité selon l'invention sont ainsi aptes à mieux supporter les contraintes élevées, notamment au sein de turbines basse pression dites « rapides », et présentent par conséquent une durée de vie accrue.

L'invention présente en outre l'avantage de ne pas entraîner d'accroissement de masse significatif d'un becquet d'étanchéité par rapport à une configuration de type connu.

## Revendications

1. Aube (36) pour roue aubagée mobile (30) de turbomachine d'aéronef, comprenant au moins un becquet d'étanchéité (48) s'étendant axialement en saillie à partir d'un corps (40) de l'aube et présentant deux surfaces d'extrémité circonférentielle opposées (64, 66), et une extrémité axiale libre (62) dont la section transversale est délimitée intérieurement et extérieurement respectivement par deux portions de cercles (68, 70) concentriques,
**caractérisée en ce que** le becquet d'étanchéité présente une section transversale (60) de raccordement au corps (40) de l'aube qui est délimitée intérieurement et extérieurement respectivement par une ligne courbe intérieure (76) et par une ligne courbe extérieure (78), chacune des lignes courbes intérieure (76) et extérieure (78) comprenant :
- une portion médiane respective (80), qui est convexe dans une direction (D) allant d'une tête (44) de l'aube vers un pied (42) de l'aube ;
- une première portion intermédiaire respective (82), qui prolonge de manière continue la portion médiane respective (80) en direction d'une première des surfaces d'extrémité circonférentielle (64) du becquet d'étanchéité, et qui est concave dans la direction (D) allant de la tête de l'aube vers le pied de l'aube, moyennant quoi un premier point d'inflexion respectif (90) sépare la portion médiane respective (80) de la première portion intermédiaire respective (82) ;
- une seconde portion intermédiaire respective (84), qui prolonge de manière continue la portion médiane respective (80) en direction d'une seconde des surfaces d'extrémité circonférentielle (66) du becquet d'étanchéité, et qui est concave dans la direction (D) allant de la tête de l'aube vers le pied de l'aube, moyennant quoi un second point d'inflexion respectif (92) sépare la portion médiane respective (80) de la seconde portion intermédiaire respective (84) ; et
- une première portion d'extrémité respective (86) et une seconde portion d'extrémité respective (88) qui prolongent respectivement de manière continue la première portion intermédiaire respective (82) et la seconde portion intermédiaire respective (84), respectivement jusqu'à la première et jusqu'à à la seconde des surfaces d'extrémité circonférentielle (64, 66) du becquet d'étanchéité ;
chaque portion de la ligne courbe intérieure (76) étant définie en regard de la portion correspondante de la ligne courbe extérieure (78), selon la direction (D) allant de la tête de l'aube vers le pied de l'aube ; et
la section transversale du becquet d'étanchéité évoluant de manière continue depuis la section transversale (60) de raccordement au corps (40) de l'aube jusqu'à l'extrémité axiale libre (62) du becquet d'étanchéité.

2. Aube selon la revendication 1, dans laquelle la ligne courbe extérieure (78) constitue une image de la ligne courbe intérieure (76) par une transformation homothétique.

3. Aube selon la revendication 1 ou 2, dans laquelle, pour chacune des lignes courbes intérieure (76) et extérieure (78), la portion médiane respective (80) présente un extremum respectif (102, 104) qui est décalé, dans la direction (D) allant de la tête de l'aube vers le pied de l'aube, par rapport à des extrémités circonférentielles respectives (94, 96) de la ligne courbe considérée, d'une distance (L1) qui est supérieure à la moitié d'une distance (L2) séparant les extrema respectifs (102, 104) des portions médianes respectives (80) des lignes courbes intérieure (76) et extérieure (78), et qui est inférieure à une fois et demi la distance (L2) séparant les extrema respectifs (102, 104) des portions médianes respectives (80) des lignes courbes intérieure (76) et extérieure (78).

4. Roue aubagée mobile (30) pour turbomachine d'aéronef, comprenant une rangée annulaire d'aubes (36) selon l'une quelconque des revendications 1 à 3, réparties autour d'un axe de la roue aubagée mobile, et dans chacune desquelles les deux portions de cercles concentriques (68, 70), qui délimitent respectivement intérieurement et extérieurement la section transversale de l'extrémité axiale libre (62) du becquet d'étanchéité, ont un centre de courbure commun situé sur l'axe de la roue aubagée mobile.

5. Roue aubagée mobile selon la revendication 4, dans laquelle, pour chacune des aubes (36), la transformation homothétique, par laquelle la ligne courbe extérieure (78) constitue une image de la ligne courbe intérieure (76), est une homothétie dont le centre est situé sur l'axe de la roue aubagée mobile.

6. Roue aubagée mobile selon l'une quelconque des revendications 4 ou 5, dans laquelle, pour chacune des aubes (36), les premières et secondes portions d'extrémité respectives (86, 88) sont des portions de cercle ayant un centre de courbure commun situé sur l'axe de la roue aubagée mobile.

7. Roue aubagée mobile selon l'une quelconque des revendications 4 à 6, dans laquelle les becquets d'étanchéité (48) respectifs des aubes (30) s'étendent en continuité aérodynamique deux-à-deux.

8. Turbine (22) pour turbomachine d'aéronef, comprenant au moins une roue aubagée mobile (30) selon l'une quelconque des revendications 4 à 7.

9. Turbomachine (10) pour aéronef, comprenant au moins une roue aubagée mobile (30) selon l'une quelconque des revendications 4 à 7.

10. Turbomachine selon la revendication 9, comprenant un corps haute pression et un corps basse pression, dans laquelle le corps basse pression comporte une turbine (22) selon la revendication 8.

## Patentansprüche

1. Schaufel (36) für bewegliches beschaufeltes Rad (30) einer Flugzeug-Turbomaschine, umfassend mindestens einen Dichtungsspoiler (48), der sich axial hervorstehend ab einem Körper (40) der Schaufel erstreckt und zwei gegenüberliegende Umfangsendflächen (64, 66) und ein freies axiales Ende (62) aufweist, dessen Querschnitt jeweils innen und außen durch zwei konzentrische Kreisabschnitte (68, 70) begrenzt ist,
**dadurch gekennzeichnet, dass** der Dichtungsspoiler einen Anschlussquerschnitt (60) an den Körper (40) der Schaufel aufweist, der jeweils innen und außen durch eine innere Krümmungslinie (76) und durch eine äußere Krümmungslinie (78) begrenzt ist, wobei sowohl die innere Krümmungsline (76) als auch die äußere Krümmungslinie (78) umfassen:
- einen jeweiligen mittleren Abschnitt (80), der in einer Richtung (D) von einem Kopf (44) der Schaufel zu einem Fuß (42) der Schaufel konvex ist;
- einen jeweiligen ersten Übergangsabschnitt (82), der den jeweiligen mittleren Abschnitt (80) in Richtung einer ersten der Umfangsendflächen (64) des Dichtungsspoilers kontinuierlich verlängert und der in der Richtung (D) vom Kopf der Schaufel zum Fuß der Schaufel konkav ist, wobei ein jeweiliger erster Krümmungspunkt (90) den jeweiligen mittleren Abschnitt (80) vom jeweiligen ersten Übergangsabschnitt (82) trennt;
- einen jeweiligen zweiten Übergangsabschnitt (84), der den jeweiligen mittleren Abschnitt (80) in Richtung einer zweiten der Umfangsendflächen (66) des Dichtungsspoilers kontinuierlich verlängert und der in der Richtung (D) vom Kopf der Schaufel zum Fuß der Schaufel konkav ist, wobei ein jeweiliger zweiter Krümmungspunkt (92) den jeweiligen mittleren Abschnitt (80) vom jeweiligen zweiten Übergangsabschnitt (84) trennt; und
- einen jeweiligen ersten Endabschnitt (86) und einen jeweiligen zweiten Endabschnitt (88), die den jeweiligen ersten Übergangsabschnitt (82) und den jeweiligen zweiten Übergangsabschnitt (84) jeweils kontinuierlich verlängern, jeweils bis zur ersten und bis zur zweiten Umfangsendfläche (64, 66) des Dichtungsspoilers;
wobei jeder Abschnitt der inneren Krümmungslinie (76) dem entsprechenden Abschnitt der äußeren Krümmungslinie (78) gemäß der Richtung (D) vom Kopf der Schaufel zum Fuß der Schaufel zugewandt definiert ist; und
sich der Querschnitt des Dichtungsspoiler kontinuierlich ab dem Anschlussquerschnitt (60) am Körper (40) der Schaufel bis zum freien axialen Ende (62) des Dichtungsspoilers entwickelt.

2. Schaufel nach Anspruch 1, wobei die äußere Krümmungslinie (78) ein Abbild der inneren Krümmungslinie (76) durch eine homothetische Transformation bildet.

3. Schaufel nach Anspruch 1 oder 2, wobei sowohl für die innere (76) als auch die äußere Krümmungslinie (78) der jeweilige mittlere Abschnitt (80) ein jeweiliges Extremum (102, 104) aufweist, das in der Richtung (D) vom Kopf der Schaufel zum Fuß der Schaufel im Verhältnis zu den jeweiligen Umfangsenden (94, 96) der entsprechenden Krümmungslinie in einem Abstand (L1) versetzt ist, der größer als die Hälfte eines Abstands (L2) ist, der die jeweiligen Extrema (102, 104) der jeweiligen mittleren Abschnitte (80) der inneren (76) und der äußeren Krümmungslinie (78) trennt und der anderthalb Mal kleiner als der Abstand (L2) ist, der die jeweiligen Extrema (102, 104) der jeweiligen mittleren Abschnitte (80) der inneren (76) und der äußeren Krümmungslinie (78) trennt.

4. Bewegliches beschaufeltes Rad (30) für eine Flugzeug-Turbomaschine, umfassend eine ringförmige Reihe von Schaufeln (36) nach einem der Ansprüche 1 bis 3, die um eine Achse des beweglichen beschaufelten Rades verteilt sind, und in denen jede von ihnen die zwei konzentrischen Kreisabschnitte (68, 70), die jeweils innen und außen den Querschnitt des freien axialen Endes (62) des Dichtungsspoilers begrenzen, ein gemeinsames Krümmungszentrum haben, das sich auf der Achse des beweglichen beschaufelten Rades befindet.

5. Bewegliches beschaufeltes Rad nach Anspruch 4, wobei für jede der Schaufeln (36) die homothetische Transformation, mittels der die äußere Krümmungslinie (78) ein Abbild der inneren Krümmungslinie (76) bildet, eine Homothetie ist, deren Zentrum sich auf der Achse des beweglichen beschaufelten Rades befindet.

6. Bewegliches beschaufeltes Rad nach einem der Ansprüche 4 oder 5, wobei für jede der Schaufeln (36) der jeweilige erste und zweite Endabschnitt (86, 88) Kreisabschnitte mit einem gemeinsamen Krümmungszentrum sind, das sich auf der Achse des beweglichen beschaufelten Rades befindet.

7. Bewegliches beschaufeltes Rad nach einem der Ansprüche 4 bis 6, wobei sich die jeweiligen Dichtungsspoiler (48) der Schaufels (30) paarig in aerodynamischer Kontinuität erstrecken.

8. Turbine (22) für Flugzeug-Turbomaschine, umfassend mindestens ein bewegliches beschaufeltes Rad (30) nach einem der Ansprüche 4 bis 7.

9. Turbomaschine (10) für Flugzeug, umfassend mindestens ein bewegliches beschaufeltes Rad (30) nach einem der Ansprüche 4 bis 7.

10. Turbomaschine nach Anspruch 9, umfassend einen Hochdruckkörper und einen Niederdruckkörper, wobei der Niederdruckkörper eine Turbine (22) nach Anspruch 8 aufweist.

## Claims

1. Blade (36) for a rotating bladed disk (30) for an aircraft turbine engine, comprising at least one sealing lip (48) extending axially projecting from a body (40) of the blade and having two opposite circumferential end surfaces (64, 66), and one free axial end (62) wherein the cross section is delimited internally and externally respectively by two concentric circle portions (68, 70),
**characterised in that** the sealing lip has a connection cross section (60) to the body (40) of the blade which is delimited internally and externally respectively by an internal curved line (76) and by an external curved line (78), each of the internal (76) and external (78) curved lines comprising:
- a respective median portion (80), which is convex in a direction (D) from a head (44) of the blade to a root (42) of the blade;
- a respective first intermediate portion (82), which continuously extends from the respective median portion (80) towards a first of the circumferential end surfaces (64) of the sealing lip, and which is concave in the direction (D) from the head of the blade to the root of the blade, whereby a respective first point of inflection (90) separates the respective median portion (80) from the respective first intermediate portion (82);
- a respective second intermediate portion (84), which continuously extends from the respective median portion (80) towards a second of the circumferential end surfaces (66) of the sealing lip, and which is concave in the direction (D) from the head of the blade to the root of the blade, whereby a respective second point of inflection (92) separates the respective median portion (80) from the respective second intermediate portion (84); and
- a respective first end portion (86) and a respective second end portion (88) which respectively continuously extend from the respective first intermediate portion (82) and the respective second intermediate portion (84), respectively to the first and to the second of the circumferential end surfaces (64, 66) of the sealing lip;
each portion of the internal curved line (76) being defined facing the corresponding portion of the external curved line (78), along the direction (D) from the head of the blade to the root of the blade; and
the cross section of the sealing lip being continuously non-constant from the connection cross section (60) to the body (40) of the blade to the free axial end (62) of the sealing lip.

2. Blade according to claim 1, wherein the external curved line (78) forms an image of the internal curved line (76) by a homothetic transformation.

3. Blade according to claim 1 or 2, wherein, for each of the internal (76) and external (78) curved lines, the respective median portion (80) has a respective extremum (102, 104) which is offset, in the direction (D) from the head of the blade to the root of the blade, with respect to the respective circumferential ends (94, 96) of the curved line in question, by a distance (L1) which is greater than half a distance (L2) separating the respective extrema (102, 104) of the respective median portions (80) of the internal (76) and external (78) curved lines, and which is less than one and a half times the distance (L2) separating the respective extrema (102, 104) of the respective median portions (80) of the internal (76) and external (78) curved lines.

4. Rotating bladed disk (30) for an aircraft turbine engine, comprising an annular row of blades (36) according to any one of claims 1 to 3, distributed about an axis of the rotating bladed disk, and in each whereof the two concentric circle portions (68, 70), which delimit respectively internally and externally the cross section of the free axial end (62) of the sealing lip, have a common centre of curvature located on the axis of the rotating bladed disk.

5. Rotating bladed disk according to claim 4, wherein, for each of the blades (36), the homothetic transformation, whereby the external curved line (78) forms an image of the internal curved line (76), is a proportional transformation wherein the centre is located on the axis of the rotating bladed disk.

6. Rotating bladed disk according to any one of claims 4 or 5, wherein, for each of the blades (36), the respective first and second end portions (86, 88) are circle portions having a common centre of curvature located on the axis of the rotating bladed disk.

7. Rotating bladed disk according to any one of claims 4 to 6, wherein the respective sealing lips (48) of the blades (30) extend in aerodynamic continuity pairwise.

8. Turbine (22) for an aircraft turbine engine, comprising at least one rotating bladed disk (30) according to any one of claims 4 to 7.

9. Turbine engine (10) for an aircraft, comprising at least one rotating bladed disk (30) according to any one of claims 4 to 7.

10. Turbine engine according to claim 9, comprising a high-pressure core and a low-pressure core, wherein the low-pressure core includes a turbine (22) according to claim 8.
